# DEMANDE DE BREVET EUROPEEN

(11) **EP 4 234 509 A2**
(43) Date de publication de la demande: **30.08.2023**
(21) Numéro de dépôt: 23160477.8
(22) Date de dépôt: 10.07.2020
(51) Int. Cl.: C03C 23/00

(54) **PROCEDE ET INSTALLATION DE DESALCALINISATION DE RECIPIENTS EN VERRE PAR VOIE LIQUIDE**

(30) Priorité: 11.07.2019 FR 1907826
(62) Demande divisionnaire de: 20753395.1
(71) Demandeur: SGD S.A., 92097 Paris la Défense Cédex (FR)
(72) Inventeur: ETCHEPARE, Pierre-Luc, 76000 ROUEN (FR); DEPOILLY, Christophe, 80210 AIGNEVILLE (FR); ZHANG, Jingwei, 91300 MASSY (FR)
(74) Mandataire: Weber, Jean-François

(57) **Abrégé**

- Procédé et installation de désalcalinisation de récipients en verre par voie liquide
- L'invention concerne un procédé de désalcalinisation de la face intérieure (5) de la paroi (2) d'un récipient (1) en verre, laquelle paroi (2) délimite une cavité (3) et une ouverture (4) donnant accès à la cavité (3), le procédé comprenant une étape de fourniture d'un récipient en verre dont la face intérieure de la paroi est à une température d'au moins 350°C, et une étape d'introduction dans la cavité, la face intérieure étant à une température d'au moins 350°C, d'un liquide de traitement contenant une substance conçue pour réagir sous l'effet de la chaleur pour provoquer une désalcalinisation du verre, l'étape d'introduction comprenant une opération d'injection, par une tête d'injection (11) disposée à distance de l'ouverture du récipient et en dehors de ce dernier, d'une dose prédéterminée du liquide selon un cône (C) de projection suffisamment étroit pour que l'intégralité de la dose se retrouve dans la cavité.
- Procédés et installations de traitement de récipients en verre

## Description

### DOMAINE TECHNIQUE

La présente invention se rapporte au domaine technique général des procédés et installations de traitement de récipients en verre, et plus précisément au domaine technique des procédés et installations de traitement de désalcalinisation de la paroi intérieure de récipients en verre.

### TECHNIQUE ANTERIEURE

Dans le domaine des emballages primaires en verre à usage pharmaceutique, on cherche à proposer des récipients, en particulier de type flacon, qui présentent une excellente compatibilité chimique avec le produit ou préparation qu'ils sont destinés à contenir. On vise en effet à prévenir toute interaction préjudiciable entre une espèce issue du verre formant le récipient et le produit que ce dernier contient. A ce titre, il est connu de soumettre des récipients en verre, préalablement à leur utilisation, à un traitement de désalcalinisation qui consiste à extraire, sur une profondeur de plusieurs dizaines de nanomètres, les ions alcalins - et en particulier les ions sodium = présents au voisinage de la surface de la paroi intérieure du récipient, et à les évacuer, de sorte à éviter autant que possible l'élution des ions alcalins dans le produit contenu par le récipient au fil du temps. Un tel traitement est généralement réalisé par introduction à l'intérieur d'un récipient en verre à traiter d'une substance réactive solide ou gazeuse et qui est capable, sous l'action de la chaleur, de générer un gaz acide susceptible de réagir chimiquement avec les ions alcalins présents dans le verre du récipient.

On connaît ainsi un procédé de traitement de désalcalinisation qui consiste à introduire à l'intérieur d'un récipient en verre chaud du sulfate d'ammonium (NH₄)₂SO₄ sous forme solide, par exemple sous la forme d'une poudre cristalline ou de tablettes, par l'intermédiaire d'un distributeur positionné au-dessus des récipients. Sous l'effet de la chaleur, le sulfate d'ammonium se sublime et forme un gaz qui réagit avec le sodium contenu dans le verre au voisinage immédiat de la surface interne du récipient traité. Le sodium ainsi extrait du verre se dépose alors à la surface de la paroi intérieure du récipient sous la forme d'un composé poudreux résiduel de sulfate de sodium Na₂SO₄, lequel peut être ensuite enlevé par lavage. On connaît également, selon un principe réactionnel similaire, un procédé de traitement de désalcalinisation qui consiste à introduire à l'intérieur d'un récipient en verre, alors que ce dernier se trouve en amont de ou dans l'arche de recuisson, du dioxyde de soufre SO₂ ou du trioxyde de soufre SOs sous forme gazeuse.

De tels procédés connus présentent néanmoins un certain nombre d'inconvénients. En effet, si le recours à une substance réactive poudreuse permet de traiter des récipients en verre à une cadence relativement élevée, grâce à une distribution continue de substance réactive poudreuse dans des récipients en mouvement sur un convoyeur, il existe un risque important de dépôt et de réaction de la substance réactive sur la paroi externe du récipient, et en particulier sur la bague de ce dernier, ce qui conduit à des défauts esthétiques, voire même à une fragilisation locale du récipient. En outre, il est difficile de maîtriser précisément la dose de substance réactive réellement introduite dans le récipient, sauf à surdimensionner la quantité de substance réactive distribuée, ce qui n'est pas sans conséquences économiques et environnementales. Le recours à une substance réactive solide sous forme de tablettes permet généralement une distribution plus précise de la substance réactive à l'intérieur des récipients. Cependant, il s'avère souvent difficile, sinon impossible, de traiter ainsi efficacement des récipients de faible volume et / ou de faible diamètre de bague, et ce en particulier à des cadences élevées. La mise en oeuvre de dioxyde de soufre SO₂ ou de trioxyde de soufre SOs sous forme gazeuse pose quant à elle d'importants problèmes sanitaires, environnementaux et techniques, compte tenu du caractère toxique et corrosif de ces gaz. De plus, le traitement de désalcalinisation de la paroi en verre n'est pas toujours réalisé de manière suffisamment uniforme et répétable, et le niveau de résistance chimique (ou hydrolytique) du récipient traité reste perfectible.

### EXPOSE DE L'INVENTION

Les objets assignés à la présente invention visent en conséquence à remédier aux différents inconvénients énumérés précédemment et à proposer un nouveau procédé de désalcalinisation, ainsi qu'une installation correspondante, qui permettent de traiter de manière particulièrement efficace des récipients en verre de toute taille et contenance, et ce à des cadences très élevées.

Un autre objet de l'invention vise à proposer un nouveau procédé de désalcalinisation, ainsi qu'une installation correspondante, qui permettent de traiter des récipients en verre de manière particulièrement fiable et répétable.

Un autre objet de l'invention vise à proposer un nouveau procédé de désalcalinisation, ainsi qu'une installation correspondante, qui permettent de traiter efficacement des récipients en verre sans en dégrader la résistance mécanique.

Un autre objet de l'invention vise à proposer un nouveau procédé de désalcalinisation, ainsi qu'une installation correspondante, qui permettent d'obtenir des récipients en verre présentant une excellente résistance hydrolytique.

Un autre objet de l'invention vise à proposer un nouveau procédé de désalcalinisation, ainsi qu'une installation correspondante, dont la mise en oeuvre est particulièrement simple et économique.

Les objets assignés à l'invention sont atteints à l'aide d'un procédé de désalcalinisation de la face intérieure de la paroi d'un récipient en verre, tel qu'un flacon, laquelle paroi délimite une cavité d'accueil pour un produit et une ouverture donnant accès à ladite cavité d'accueil, ledit procédé comprenant :
- une étape de fourniture d'un récipient en verre dont la face intérieure de la paroi est à une température d'au moins 350°C, et
- une étape d'introduction à l'intérieur de ladite cavité d'accueil, alors que ladite face intérieure est à une température d'au moins 350°C, d'un liquide de traitement contenant une substance de traitement conçue pour réagir sous l'effet de la chaleur de la face intérieure de la paroi du récipient pour provoquer une désalcalinisation du verre,
ladite étape d'introduction comprenant au moins une opération d'injection, à l'aide d'une tête d'injection disposée à distance de l'ouverture du récipient et en dehors de ce dernier, d'une dose prédéterminée dudit liquide de traitement selon un cône de projection suffisamment étroit relativement à l'ouverture du récipient pour que sensiblement l'intégralité de ladite dose prédéterminée se retrouve à l'intérieur de la cavité du récipient.

Les objets assignés à l'invention sont également atteints à l'aide d'une installation de désalcalinisation de la face intérieure de la paroi d'un récipient en verre, tel qu'un flacon, laquelle paroi délimite une cavité d'accueil pour un produit et une ouverture donnant accès à ladite cavité d'accueil, ladite installation comprenant
- un moyen de fourniture d'un récipient en verre dont ladite face intérieure est à une température d'au moins 350°C, et
- un moyen d'introduction à l'intérieur de ladite cavité d'accueil, alors que ladite face -intérieure est à une température d'au moins '350°C, d'un liquide de traitement contenant une substance de traitement conçue pour réagir sous l'effet de la chaleur de la face intérieure de la paroi du récipient pour provoquer une désalcalinisation du verre,
ledit moyen d'introduction du liquide de traitement comprenant au moins une tête d'injection conçue pour être disposée à distance de l'ouverture du récipient et en dehors de ce dernier, et pour injecter une dose prédéterminée dudit liquide de traitement selon un cône de projection suffisamment étroit relativement à l'ouverture du récipient pour que sensiblement l'intégralité de ladite dose se retrouve à l'intérieur de la cavité du récipient.

### DESCRIPTION SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemple illustratif et non limitatif, parmi lesquels :
- la figure 1 illustre, de manière schématique, un exemple de récipient en verre de type flacon soumis à une étape d'introduction d'un liquide de traitement dans sa cavité, conformément au procédé de désalcalinisation selon l'invention ;
- la figure 2 illustre, de manière schématique et selon une vue latérale, un mode de réalisation d'une installation de désalcalinisation selon l'invention ;
- la figure 3 illustre, de manière schématique et selon une vue de dessus, l'installation de désalcalinisation de la figure 2.

### MANIERES DE REALISER L'INVENTION

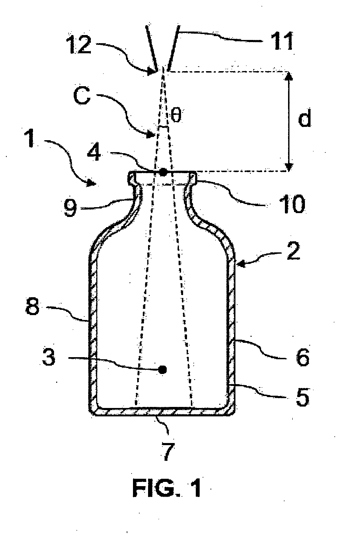

L'invention concerne un procédé de traitement d'un récipient 1 en verre, tel qu'un flacon, comprenant une paroi 2 délimitant une cavité d'accueil 3 pour un produit (ou substance) et une ouverture 4 donnant accès à ladite cavité d'accueil 3. La paroi en verre 2 du récipient 1 présente une face intérieure 5, située en regard de ladite cavité d'accueil 3 et préférentiellement destinée à venir en contact direct avec ledit produit, et une face extérieure 6 opposée. Préférentiellement réalisé en verre moulé ou étiré, et formé d'une pièce de verre unique, monolithique, le récipient 1 concerné par l'invention peut présenter toute forme adaptée à sa fonction, comme par exemple une forme de flacon ou de bouteille. Comme illustré en exemple à la figure 1, la paroi 2 du récipient 1 est avantageusement formée par un fond 7 en verre, une paroi latérale 8 en verre qui s'élève à partir de la périphérie du fond 7, et un col 9 pourvu d'une bague 10 qui délimite l'ouverture 4 du récipient 1, pour permettre la mise en communication la cavité d'accueil 3 avec l'extérieur. Avantageusement, ladite ouverture 4 est prévue pour pouvoir être obturée par un bouchon ou un opercule, amovible ou perforable.

De préférence, le produit destiné à être reçu dans la cavité 3 du récipient 1 est avantageusement fluide, c'est-à-dire susceptible de s'écouler comme par exemple une substance liquide, pâteuse (tel qu'un liquide avec un degré de viscosité élevé) ou pulvérulente. De préférence, il s'agit d'un produit ou une substance de nature pharmaceutique, comme par exemple un médicament, destiné éventuellement à être administré par voie parentérale (générale ou locorégionale) ou encore à être ingéré ou absorbé par un patient, ou encore une substance de nature diagnostique, comme par exemple un réactif chimique ou biologique. Par extension, le récipient 1 peut être conçu pour contenir une substance de nature biologique (ou fluide corporel), tel que par exemple du sang, un produit ou un sous-produit sanguin, de l'urine, etc. Même si l'application aux domaines pharmaceutiques et diagnostiques est préférée, l'invention n'est toutefois pas limitée au traitement de récipients à usage pharmaceutique ou diagnostique et peut notamment concerner un récipient conçu pour contenir une substance liquide, pâteuse ou pulvérulente à usage industriel (stockage de produits chimiques, etc.), vétérinaire, alimentaire, ou encore cosmétique.

Au sens de l'invention, le terme « *verre* » désigne un verre minéral. Il s'agit typiquement d'un verre contenant au moins une espèce alcaline ou alcalino-terreuse, tel que du sodium en particulier. Si le procédé selon l'invention est particulièrement bien adapté au traitement d'un récipient en verre silicosodocalcique (verre dit de « *Type III* »), il présente cependant également un intérêt pour le traitement de récipients en verre borosilicate (verre dit de « *Type I* »), dans la mesure où un tel verre renferme effectivement au moins une espèce alcaline, bien qu'en quantité moindre que dans le cas d'un verre silicosodocalcique. De manière préférentielle, le verre constituant la paroi 2 du récipient 1 est transparent (ou au moins translucide) dans le domaine du visible. Il peut s'agir indifféremment d'un verre incolore ou coloré, notamment pour protéger la substance fluide contenue au sein du récipient des effets de la lumière, en particulier dans certaines plages de longueur d'onde (UV, etc.).

Plus spécifiquement, le procédé selon l'invention est un procédé de désalcalinisation de la face intérieure 5 de la paroi 2 d'un tel récipient 1 en verre. Un tel procédé de désalcalinisation vise à extraire, typiquement sur une profondeur de plusieurs dizaines de nanomètres, les ions alcalins (et en particulier les ions sodium) présents dans le verre au voisinage de la surface de la face intérieure 5 de la paroi 2 du récipient 1. A l'issue du procédé selon l'invention, le verre au voisinage de la surface de la face intérieure 5 de la paroi 2 du récipient 1 traité est ainsi, de préférence significativement, appauvri en ions alcalins et / ou alcalino-terreux.

En premier lieu, le procédé selon l'invention comprend une étape de fourniture d'un récipient 1 en verre, tel que décrit ci-dessus, dont (au moins) la face intérieure 5 de la paroi 2 est à une température d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C. Selon une variante, cette étape de fourniture comprend une opération de chauffage, à l'aide de tout moyen de chauffage adapté connu, d'un récipient en verre préexistant, conforme à la description ci-dessus, et dont la face intérieure de la paroi est initialement à une température proche (si non égale) à la température ambiante, pour le chauffer de manière à ce que la température d'au moins la face intérieure de sa paroi atteigne une valeur d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C. Selon une autre variante, plus préférentielle, l'étape de fourniture du récipient 1 comprend une opération de collecte d'un récipient 1 en verre, conforme à la description ci-dessus, en sortie d'une machine de formage à chaud d'un récipient en verre à partir d'une ébauche en verre, alors que ledit récipient 1 est encore suffisamment chaud pour que (au moins) la face intérieure 5 de la paroi 2 dudit récipient 1 soit à une température d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C. Selon cette variante préférentielle, le procédé selon l'invention ne nécessite donc pas la mise en oeuvre d'une opération de chauffage particulière, la face intérieure 5 de la paroi 2 du récipient 1 étant portée à une température d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C, en conséquence directe d'une opération de formage préalable dudit récipient 1. Une telle opération de formage peut être réalisée à l'aide de toute installation connue de formage de récipients en verre, telle que par exemple une machine IS dans le cas d'un récipient réalisé en verre moulé. La mise en oeuvre du procédé selon l'invention s'en trouve ainsi simplifiée, en particulier lorsque ce dernier est mis en oeuvre dans un contexte industriel de fabrication de récipients en verre.

Le procédé selon l'invention comprend également une étape d'introduction à l'intérieur de la cavité d'accueil 3 du récipient 1 à traiter, alors que la face intérieure 5 de la paroi 2 de ce dernier est à une température d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C, d'un liquide de traitement contenant une substance de traitement (ou substance de désalcalinisation) conçue pour réagir sous l'effet de la chaleur de la face intérieure 5 de la paroi 2 du récipient 1 pour provoquer une désalcalinisation du verre, typiquement au voisinage de la surface de la face intérieure 5 de la paroi 2. Il peut s'agir une substance qui, en tant que telle, est apte à entrer elle-même directement en contact avec la face intérieure 5 chaude de la paroi 2 du récipient 1 pour réagir, sous l'effet de la chaleur, avec une ou plusieurs espèces alcalines présente(s) dans le verre formant la paroi 2 du récipient 1 ou encore d'une substance apte à se décomposer sous l'effet de la chaleur régnant dans la cavité 3 du récipient, du fait de la température susvisée à laquelle est portée la face intérieure 5 de la paroi 2, pour produire une ou plusieurs nouvelle(s) espèce(s) ou substance(s) chimique(s), laquelle ou lesquelles sont capables d'entrer en contact avec la surface de la face intérieure 5 de la paroi 2 du récipient 1 et de réagir avec une ou plusieurs espèces alcalines ou alcalino-terreuse(s) présente(s) dans le verre formant ladite paroi 2 afin d'obtenir l'effet de désalcalinisation recherché.

Il a été observé que le fait d'introduire la substance de traitement, qui plus est phase liquide, à l'intérieur d'un récipient 1 déjà porté à température de traitement (c'est-à-dire à une température comprise dans les plages de température susvisées) permet d'obtenir de bien meilleures performances, notamment en matière d'homogénéité du traitement de désalcalinisation de la face intérieure 5 de la paroi 2 du récipient 1 et en matière de résistance hydrolytique du récipient 1 ainsi traité, que lorsque la même substance de traitement est introduite à l'intérieur d'un récipient 1 froid avant que ce dernier ne soit porté à température de traitement pour faire réagir à chaud ladite substance de traitement.

De préférence, ladite substance de traitement comprend un composé soufré, et de préférence encore un composé contenant du soufre combiné à de l'oxygène, en solution ou en suspension dans un liquide volatile, c'est-à-dire dans un liquide susceptible de s'évaporer sous l'effet de la chaleur, et à tout le moins à des températures d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C . Avantageusement, ce liquide volatile peut être un solvant dudit composé.

De manière plus préférentielle encore, ledit composé soufré est un sulfate d'ammonium, et ledit liquide volatile est de préférence de l'eau. Il s'agit alors préférentiellement dans ce cas d'eau déminéralisée ou, de manière plus préférentielle encore, d'eau ultra-pure. Le sulfate d'ammonium est alors avantageusement au moins partiellement (et de préférence totalement) dissous dans l'eau, selon une concentration prédéfinie. Outre que la production, le stockage et la mise en oeuvre d'un tel liquide de traitement sont relativement aisées, sûres et peu onéreuses, il a été observé que d'excellents résultats en matière de résistance hydrolytique du verre peuvent en outre être obtenus en utilisant un tel liquide de traitement formé de sulfate d'ammonium dissous dans de l'eau. En particulier, de très bons résultats ont été obtenus pour des récipients 1 en verre dont la face intérieure 5 de la paroi 2 est à une température préférentiellement comprise entre 500°C et 700°C, et plus préférentiellement encore entre 500°C et 650°C, lors de l'étape d'introduction du liquide de traitement. Ces résultats pourraient s'expliquer par un phénomène d'absorption des molécules d'eau évaporées sous l'effet de la chaleur, qui facilite ou améliore le traitement de désalcalinisation du verre par le sulfate d'ammonium. L'invention n'est toutefois évidemment pas limitée à cet exemple de substance de traitement et de liquide volatile, d'autres substances et liquides volatiles pouvant effectivement convenir à l'obtention de l'effet dé désalcalinisation recherché par réaction avec le verre sous l'effet de la chaleur. Par exemple, la substance de traitement pourra comprendre un composé soufré formé de dioxyde ou de trioxyde de soufre gazeux, qui serait alors dissous dans le solvant liquide (liquide volatile), ou encore un mélange d'un composé soufré et d'un composé fluoré. Dans ces cas de figure également, le liquide volatile pourra avantageusement être de l'eau (de préférence, de l'eau déminéralisée et, de manière plus préférentielle encore, d'eau ultra-pure), tant pour une question de praticité et de sureté de mise en oeuvre que pour des questions d'efficacité du traitement, comme évoqué ci-avant.

Selon l'invention, l'étape d'introduction du liquide de traitement à l'intérieur de la cavité d'accueil 3 du récipient 1 à traiter comprend au moins une opération d'injection, à l'intérieur de ladite cavité 3, d'une dose prédéterminée dudit liquide de traitement, à l'aide d'une tête (ou buse) d'injection 11 qui est disposée à distance de l'ouverture 4 du récipient 1 à traiter et en dehors dudit récipient 1. Ainsi la tête d'injection 11 ne pénètre pas à l'intérieur de la cavité 3 du récipient 1 au cours de, ou aux fins de, ladite opération d'injection. Dans un mode de réalisation préférentiel, et comme illustré schématiquement à la figure 1, ladite tête d'injection 11 est ainsi disposée en regard de l'ouverture 4 du récipient 1, et au-dessus de ladite ouverture 4, le récipient 1 étant positionné à la verticale, avec son fond 7 orienté vers le sol. Ladite dose prédéterminée de liquide de traitement correspond avantageusement à une dose également prédéterminée, connue, de substance de traitement, dans la mesure où l'on connaît le volume de la dose prédéterminée de liquide de traitement projetée par la tête d'injection 11 d'une part, et la concentration (massique ou molaire) du liquide de traitement en substance de traitement d'autre part. Ainsi, selon la quantité de substance de traitement requise pour obtenir le niveau de désalcalinisation souhaité (avantageusement caractérisé par une mesure de la résistance hydrolytique RH du verre du récipient selon les protocoles de mesure usuels) pour un récipient 1 de dimensions données, il est avantageusement possible soit de moduler le volume de la dose prédéterminée pour une concentration en substance de traitement fixe et connue, soit de moduler au contraire la concentration en substance de traitement pour un volume de la dose prédéterminée connu et fixe, soit encore, comme on le verra plus loin, de répéter l'opération d'injection.

Selon l'invention, ladite opération d'injection est réalisée de manière à injecter ladite dose prédéterminée de liquide de traitement selon un cône C de projection suffisamment étroit, relativement à l'ouverture 4 du récipient 1, pour que sensiblement l'intégralité de ladite dose prédéterminée se retrouve à l'intérieur de la cavité 3 du récipient 1, à l'issue de ladite opération d'injection. Lorsque la tête d'injection 11 est disposée en regard et à distance de l'ouverture 4 du récipient 1, le cône C de projection présente donc avantageusement une section transverse, incluse dans un plan dans lequel est inscrite l'ouverture 4 du récipient 1, qui est de dimensions inférieures aux dimensions respectives de ladite ouverture 4 du récipient 1 dans ledit plan. Comme illustré schématiquement à la figure 1, le cône C de projection généré par la tête d'injection 11 peut alors avantageusement présenter une base (fictive) de dimensions inférieures, et de préférence très inférieures, aux dimensions respectives de l'ouverture 4 du récipient 1, de telle manière que la totalité de la dose prédéterminée de liquide de traitement (aux éventuelles pertes inévitables, et quoiqu'il en soit négligeables, près) puisse être injectée à l'intérieur de la cavité 3 du récipient 1, et donc sensiblement sans aucune dispersion de liquide de traitement à côté du récipient 1 ou sur la face extérieure 6 de la paroi 2 et la bague 10 de ce dernier. On notera que l'expression « *cône de projection* » n'est pas à considérer, dans le contexte de l'invention, selon une définition mathématique stricte du terme « *cône* », mais qu'on entend préférentiellement par « *cône de projection* », une enveloppe fictive (qu'elle soit conique, tronconique, voire même idéalement sensiblement cylindrique) à l'intérieur de laquelle est contenue sensiblement l'intégralité de la dose prédéterminée de liquide de traitement projetée par la tête d'injection 11 en direction de la cavité 3 du récipient 1, tel qu'illustré en pointillé à la figure 1.

La combinaison particulière de la caractéristique de température de la face intérieure 5 de la paroi 2 du récipient 1 à traiter, d'une part, et des caractéristiques de l'étape décrite ci-dessus d'introduction du liquide de traitement dans la cavité 3 du récipient 1 permet ainsi avantageusement de désalcaliniser de manière particulièrement efficace des récipients 1 en verre, quelles que soient leur taille et leur contenance, et ce à des cadences très élevées lorsque le procédé selon l'invention est appliqué successivement à une pluralité de récipients 1 en verre. En effet, il n'est pas nécessaire de procéder à des cycles d'insertion et de retrait de la tête d'injection 11 dans, réciproquement hors de, la cavité 3 de récipients 1 à traiter pour traiter une pluralité de récipients successivement amenés en regard de là tête d'injection 11. En outre, le procédé selon l'invention est particulièrement économique, propre et respectueux de l'environnement, puisqu'il permet d'éviter un surdosage en substance de traitement et la dispersion inutile d'une quantité de cette substance de traitement hors du récipient à traiter.

Il est désirable que la tête d'injection 11 ne soit pas disposée trop près du récipient 1 à traiter au cours de l'opération d'injection de ladite dose prédéterminée de liquide de traitement, afin notamment d'éviter l'endommagement de la tête d'injection 11 sous l'effet de la chaleur émanant du récipient 1. D'autre part, il est préférable que la tête d'injection 11 ne soit pas non plus disposée à une distance d trop importante de l'ouverture 4 du récipient 1, afin notamment de ne pas dégrader la précision de l'opération d'injection et d'en faciliter la mise en oeuvre pratique. Enfin, il est judicieux de choisir la distance d entre la tête d'injection 11 et l'ouverture 4 du récipient 1de manière à limiter le risque d'évaporation du liquide de traitement, sous l'effet de la chaleur émanant du récipient 1, avant même que la dose ait pu effectivement intégralement pénétrer la cavité 3 du récipient 1. A ce titre, au cours de l'opération d'injection de ladite dose prédéterminée de liquide de traitement, la tête d'injection 11 pourra être avantageusement disposée sensiblement en regard de l'ouverture 4 du récipient 1 (comme envisagé ci-avant) et à une distance d préférentiellement comprise entre 1 cm et 20 cm, et plus préférentiellement encore entre 1 cm et 5 cm, de ladite ouverture 4 au cours de l'étape d'injection. Cette distance d s'entend préférentiellement ici de la distance moyenne mesurée en ligne droite entre, d'une part, l'ouverture de sortie 12 de la tête d'injection 11 (par laquelle la dose prédéterminée de liquide de traitement sort de la tête d'injection 11), et un plan contenant l'ouverture 4 du récipient 1, comme illustré à la figure 1.

Afin de faciliter l'injection, conformément à ce qui précède, de l'intégralité de la dose prédéterminée de liquide de traitement à l'intérieur de la cavité 3 du récipient 1 à traiter, le cône C de projection de ladite dose prédéterminée de liquide de traitement est formé, par la tête d'injection 4, de sorte à présenter préférentiellement un angle θ d'apex (ou angle d'ouverture) sensiblement compris entre 0° et 5°. De manière plus préférentielle encore, l'angle θ d'apex du cône de projection est sensiblement compris entre 0° et 1°, de sorte que la dose prédéterminée de liquide de traitement est avantageusement injectée dans la cavité 3 du récipient 1 selon une enveloppe fictive cylindrique ou quasi-cylindrique. Ainsi, si en sortie de la tête d'injection 11 la dose prédéterminée de liquide de traitement se présente, par exemple, sous la forme d'une pluralité de gouttelettes de liquide de traitement, plus ou moins distinctes les unes des autres, ces dernières peuvent alors former, entre la tête d'injection 11 et la cavité 3 du récipient 1, un filet ou un jet sensiblement rectiligne de liquide de traitement.

De manière préférentielle, le liquide de traitement présente une concentration prédéfinie en ladite substance de traitement en solution qui est proche (si non égale) ou juste au-dessous de la concentration à saturation. En d'autres termes, le liquide de traitement contient ladite substance de traitement, qui est sensiblement totalement dissoute dans un liquide, et de préférence un liquide volatile tel qu'évoqué précédemment, en une quantité proche ou juste au-dessous de la quantité maximale qui peut être dissoute dans le liquide considéré pour une température choisie de mise en oeuvre du liquide de traitement. La concentration prédéfinie correspond ainsi avantageusement à une concentration en substance de traitement la plus élevée possible, sans dépasser la concentration à saturation. Typiquement, la concentration prédéfinie est ainsi sensiblement comprise entre environ 70 % et 100 % de la concentration à saturation, de préférence comprise entre environ 80 % et 100 % de la concentration à saturation, de préférence encore comprise entre environ 90 % et 100 % de la concentration à saturation pour une température choisie de mise en oeuvre du liquide de traitement. De la sorte, il est possible d'introduire dans le récipient 1 une dose prédéterminée de liquide de traitement qui renferme une quantité optimale de substance de traitement dans un volume de dose prédéterminée le plus faible possible. On optimise de la sorte la qualité du traitement de désalcalinisation tout en limitant le risque d'endommagement du récipient 1 par choc thermique, lorsque le liquide de traitement entre en contact avec la face intérieure 5 chaude de la paroi 2 du récipient 1. Le fait de maintenir une concentration en substance de traitement inférieure ou égale à la concentration à saturation, permet avantageusement de garantir une excellente reproductibilité de la quantité de substance de traitement introduite dans le récipient 1, et de limiter en outre le risque de bouchage de la tête d'injection 11 lorsque la substance de traitement est une substance solide, dissoute dans un liquide volatile pour former le liquide de traitement (risque de précipitation). Par exemple, lorsque le liquide de traitement comprend un sulfate d'ammonium (substance de traitement) dissout dans de l'eau (liquide volatile), comme déjà envisagé ci-avant, la concentration prédéfinie du liquide de traitement en sulfate d'ammonium peut être généralement comprise entre environ 0,1 g / mL et environ 1 g / mL, selon notamment la température de mise en oeuvre du liquide de traitement et le niveau de résistance hydrolytique recherché. Toutefois, compte tenu de ce qui précède, il est plus ainsi avantageux que la concentration prédéfinie du liquide de traitement en sulfate d'ammonium dissous soit comprise entre environ 0,5 g / mL et environ 0,8 g / mL pour une température du liquide de traitement comprise entre environ 0°C et environ 40°C, et de préférence entre environ 10°C et environ 40°C. La concentration prédéfinie du liquide de traitement en sulfate d'ammonium dissous pourrait aller jusqu'à environ 1 g / mL pour une température du liquide de traitement d'environ 90°C. De manière préférentielle, le volume de la dose prédéterminée de liquide de traitement injectée par la tête d'injection 11 est choisi sensiblement compris entre 5 µL et 50 µL, et de préférence entre 5 µL et 30 µL, ce qui permet avantageusement de limiter le risque d'endommagement du récipient 1 par choc thermique, lorsque le liquide de traitement entre en contact avec la face intérieure 5 chaude de la paroi 2 du récipient 1. En outre, le choix d'un tel volume restreint de liquide de traitement contribue à faciliter l'injection de l'intégralité de la dose prédéterminée de substance de traitement dans la cavité 3 des récipients 1 à traiter, et ce même à des cadences très élevées.

Bien que le procédé selon l'invention puisse présenter un intérêt pour le traitement d'un récipient 1 qui reste immobile relativement à la tête d'injection 11 au cours de l'opération d'injection, l'opération d'injection du procédé selon l'invention est avantageusement réalisée alors que le récipient 1 à traiter est en mouvement relativement à la tête d'injection 11, de préférence à une vitesse d'au moins 25 m par minute, de préférence encore d'au moins 30 m par minute, et de préférence encore jusqu'à 40 m par minute, de manière notamment à pouvoir traiter à l'aide de la tête d'injection 11 une pluralité de récipients 1 à une cadence particulièrement élevée. Selon une variante, la tête d'injection 11 se déplace, au cours de l'opération d'injection, par rapport au récipient 1 à traiter, qui est quant à lui maintenu immobile (dans le référentiel terrestre). Selon une autre variante, plus préférentielle, la tête d'injection 11 est au contraire maintenue immobile (dans le référentiel terrestre), tandis que le récipient 1 à traiter se déplace relativement à la tête d'injection 11, par exemple sur un convoyeur positionné en-dessous et en regard de la tête d'injection 11.

Dans le cas notamment où l'opération d'injection du procédé selon l'invention est ainsi avantageusement réalisée alors que le récipient 1 à traiter est en mouvement relativement à la tête d'injection 11, le procédé selon l'invention comprend préférentiellement une étape de détection de la présence du récipient 1 en amont de la tête d'injection 11 (en considération du sens de déplacement relatif de la tête d'injection 11 et du récipient 1), préalablement à l'opération d'injection, pour synchroniser le déclenchement de l'opération d'injection avec l'arrivée du récipient 1 au niveau de la tête d'injection 11, et de préférence en regard de l'ouverture de sortie 12 de cette dernière. En effet, connaissant la vitesse de déplacement du récipient 1 relativement à la tête d'injection 11, et sur la base d'un signal de détection, généré lors l'étape de détection, de la présence du récipient 1 à une distance connue en aval de la tête d'injection 11, il est ainsi avantageusement possible de déclencher l'injection de la dose prédéterminée par la tête d'injection 11 au moment précis où le récipient 1 est positionné en regard, et de préférence à l'aplomb, de l'ouverture de sortie 12 de la tête d'injection 11.

Avantageusement, l'étape d'introduction du liquide de traitement à l'intérieur de la cavité d'accueil 3 du récipient 1 peut comprend une pluralité d'opérations d'injection successives de ladite dose prédéterminée de liquide de traitement. En effet, il peut être nécessaire, selon les dimensions du récipient 1 en verre à traiter, de mettre en oeuvre une quantité importante de substance de traitement pour atteindre le niveau de désalcalinisation souhaité, sans pour autant avoir à recourir pour cela à des doses prédéterminées de liquide de traitement de volumes importants, qui risqueraient d'engendrer un risque élevé des chocs thermiques préjudiciables à la résistance mécanique du récipient 1. S'il est envisageable, comme discuté précédemment, d'augmenter la quantité de substance de traitement en jouant sur la concentration de cette dernière dans le liquide de traitement, il peut donc être également avantageusement envisagé (en complément ou alternativement) de soumettre plusieurs fois un même récipient 1 en verre à l'opération d'injection du procédé selon l'invention en mettant en oeuvre, à chacune itération, une dose prédéterminée de liquide de traitement de volume restreint (et par exemple compris entre 5 µL et 50 µL, et de préférence entre 5 µL et 30 µL, comme évoqué précédemment). Dans un tel cas de figure, ladite opération d'injection peut alors être réalisée, par exemple, à l'aide d'une seule et même tête d'injection 11, le récipient 1 restant alors préférentiellement immobile (au moins temporairement) en regard de la tête d'injection 11. Alternativement, ladite opération d'injection pourrait être réalisée à l'aide d'une pluralité de têtes d'injection 11 distinctes, par exemple positionnées l'une à la suite de l'autre selon une trajectoire de déplacement du récipient 1.

Afin d'améliorer encore la répétabilité et la fiabilité du traitement de désalcalinisation, en tenant compte d'éventuelles variations de conditions climatiques, le procédé selon l'invention comprend de préférence, préalablement à l'étape d'introduction du liquide de traitement à l'intérieur de la cavité 3 du récipient 1, une opération de régulation et de contrôle de la température du liquide de traitement pour s'assurer que celle-ci reste sensiblement constante dans le temps, et avantageusement égale à une température de consigne prédéfinie. Ainsi, la dose prédéterminée de liquide de traitement est injectée dans la cavité 3 du récipient 1 à une température avantageusement prédéfinie, qui est alors sensiblement identique pour chaque récipient 1 à traiter selon le procédé de l'invention.

De manière alternative ou complémentaire, le procédé selon l'invention peut comprendre, préalablement à l'étape d'introduction du liquide de traitement à l'intérieur de la cavité 3 du récipient 1, une opération de préchauffage du liquide de traitement (typiquement à une température supérieure à la température ambiante), de sorte à réduire l'écart entre la température de la dose prédéterminée de liquide de traitement injectée lors de l'opération d'injection, et la température de la face intérieure 5 de la paroi 2 du récipient 1 à traiter. Cela permet notamment de réduire encore le risque de choc thermique lors du traitement du récipient 1, et donc le risque d'endommagement de ce dernier.

Le procédé selon l'invention pourra avantageusement comprendre, après l'étape d'introduction du liquide de traitement dans sa cavité 3, une étape de transmission du récipient 1 ainsi traité à un dispositif de recuisson de récipients en verre, telle qu'une arche de recuisson industrielle classique.

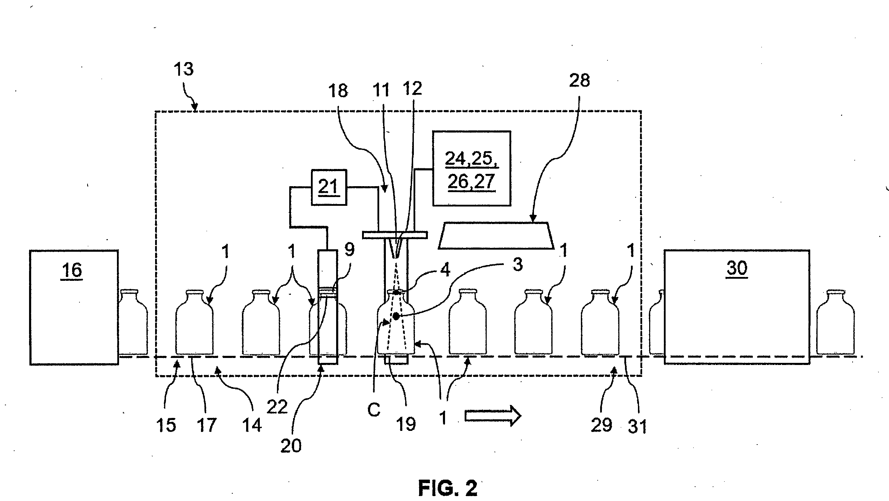

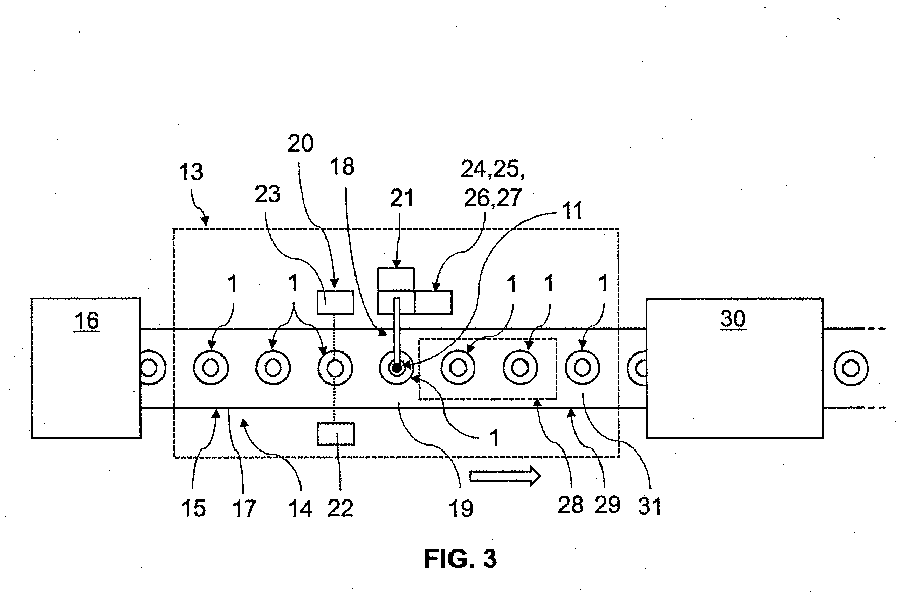

L'invention concerne également, en tant que telle, une installation 13 de traitement d'un récipient 1 en verre, avantageusement destinée à mettre en oeuvre le procédé selon l'invention. Plus spécifiquement, l'installation 13 selon l'invention est une installation de désalcalinisation de la face intérieure 5 de la paroi 2 d'un tel récipient 1 en verre, laquelle paroi 2 délimite une cavité d'accueil 3 pour un produit et une ouverture 4 donnant accès à ladite cavité d'accueil 3. L'installation 13 en question est avantageusement une installation permettant la mise en oeuvre d'un procédé de désalcalinisation conforme à l'invention, de sorte que la description exposée dans ce qui précède en relation avec le procédé selon l'invention reste valable et applicable, *mutatis mutandis,* à la présente installation 13, et réciproquement. Il s'agit préférentiellement d'une installation industrielle, avantageusement automatisée. De manière plus préférentielle encore, ladite installation 13 est conçue pour traiter de manière sensiblement ininterrompue un grand nombre de récipients 1. Un mode de réalisation de l'installation 13 selon l'invention est illustré en exemple, de manière schématique, aux figures 2 et 3.

L'installation 13 selon l'invention comprend un moyen de fourniture 14 d'un récipient 1 en verre, tel que décrit ci-dessus, dont (au moins) la face intérieure 5 de la paroi 2 est à une température d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C. Selon une variante, ce moyen de fourniture comprend un moyen de chauffage, de tout type adapté connu (et par exemple, de type arche ou four), conçu pour chauffer un récipient en verre préexistant, conforme à la description ci-dessus, et dont la face intérieure de la paroi est initialement à une température proche (si non égale) à la température ambiante, de manière à ce que la température d'au moins la face intérieure de la paroi du récipient atteigne une valeur d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C. Selon une autre variante, plus préférentielle, le moyen de fourniture 14 du récipient 1 comprend un système de collecte 15 d'un récipient 1 en verre, conforme à la description ci-dessus, en sortie d'une machine de formage 16 à chaud d'un récipient en verre à partir d'une ébauche en verre, alors que ledit récipient 1 est encore suffisamment chaud pour que (au moins) la face intérieure 5 de la paroi 2 dudit récipient 1 soit à une température d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C. Selon cette variante préférentielle, l'installation 13 selon l'invention ne comprend donc avantageusement pas de moyen de chauffage spécifique pour chauffer le récipient 1, la face intérieure 5 de la paroi 2 du récipient 1 étant portée à une température d'au moins 350°C, de préférence comprise entre 350°C et 850°C, de préférence comprise entre 350°C et 800°C, de préférence comprise entre 350°C et 700°C, de préférence entre 500°C et 700°C,de préférence encore comprise entre 500°C et 650°C, en conséquence directe d'une opération de formage préalable dudit récipient 1 par ladite machine de formage 16. Comme indiqué précédemment en lien avec le procédé selon l'invention, cette machine ou installation de formage 16 de récipients en verre peut être de tout type connu de formage, telle que par exemple une machine IS dans le cas d'un récipient réalisé en verre moulé. Le système de collecte 15 peut, par exemple, comprendre un bras avantageusement robotisé et / ou un convoyeur 17 (par exemple à bande ou à rouleaux), conçu(s), agencé(s) et dimensionné(s) pour collecter un récipient 1 en verre en sortie d'une machine de formage 16, suffisamment près de cette dernière pour que (au moins) la face intérieure 5 de la paroi 2 du récipient 1 soit encore à une température d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C.

L'installation 13 selon l'invention comprend également un moyen (ou poste) d'introduction 18 à l'intérieur de la cavité d'accueil 3 du récipient 1 à traiter, alors que la face intérieure 5 de la paroi 2 de ce dernier est à une température d'au moins 350°C, de préférence comprise entre 350°C et 850°C, de préférence comprise entre 350°C et 800°C, de préférence comprise entre 350°C et 700°C, de préférence comprise entre 500°C et 700°C, et de préférence encore comprise entre 500°C et 650°C, d'un liquide de traitement contenant une substance de traitement (ou substance de désalcalinisation) conçue pour réagir sous l'effet de la chaleur de la face intérieure 5 de la paroi 2 du récipient 1 pour provoquer une désalcalinisation du verre, typiquement au voisinage de la surface de la face intérieure 5 de la paroi 2. Les liquide et substance de traitement mis en oeuvre par l'installation, ainsi que les principes réactionnels associés à ces derniers, sont avantageusement conformes aux liquide et substance de traitement précédemment décrits en lien avec le procédé selon l'invention. Le moyen d'introduction 18 du liquide de traitement comprend au moins une tête (ou buse ou valve) d'injection 11 conçue pour être disposée (et maintenue) à distance de l'ouverture 4 du récipient 1 et en dehors de ce dernier, et pour injecter (alors que la tête d'injection 11 est ainsi disposée) une dose prédéterminée du liquide de traitement selon un cône C de projection suffisamment étroit relativement à l'ouverture 4 du récipient 1 pour que sensiblement l'intégralité de ladite dose prédéterminée se retrouve à l'intérieur de la cavité 3 du récipient 1. En d'autres termes, le moyen d'introduction 18 est conçu pour maintenir la tête d'injection 11 de manière que cette dernière ne pénètre pas à l'intérieur de la cavité 3 du récipient 1 lorsque la tête d'injection 11 est en fonctionnement et injecte ladite dose prédéterminée de liquide traitement dans la cavité 3 du récipient 1. La tête d'injection 11 est quant à elle conçue pour générer, au niveau d'un orifice (ouverture) de sortie 12, ladite dose prédéterminée de liquide de traitement et l'injecter, la projeter, selon un cône C de projection présentant une base (fictive) de dimensions inférieures, et de préférence très inférieures, aux dimensions respectives de l'ouverture 4 du récipient 1, tel que représenté à la figure 1 et décrit précédemment en lien avec le procédé selon l'invention.

La combinaison particulière des caractéristiques du moyen de fourniture 14 du récipient 1, d'une part, et des caractéristiques du moyen d'introduction 18 du liquide de traitement dans la cavité 3 du récipient 1 rend ainsi l'installation 13 selon l'invention avantageusement apte à réaliser un traitement de désalcalinisation particulièrement efficace de récipients 1 en verre, quelles que soient leur taille et leur contenance, et ce à des cadences très élevées lorsque l'installation selon l'invention est mise en oeuvre pour traiter successivement une pluralité de récipients 1 en verre. En outre, l'installation 13 selon l'invention est particulièrement économique, propre et respectueuse de l'environnement, puisqu'elle permet d'éviter un surdosage en substance de traitement et la dispersion inutile d'une quantité de cette substance de traitement hors du récipient à traiter.

Dans un mode de réalisation préférentiel, et comme illustré schématiquement à la figure 2, le moyen de fourniture 14 du récipient 1 en verre à traiter est conçu pour amener le récipient 1 au moyen d'introduction 18 de sorte que le récipient 1 est positionné à la verticale, avec son fond 7 orienté vers le sol, et le moyen d'introduction 18 est conçu de manière que la tête d'injection 11 puisse être disposée en regard de l'ouverture 4 du récipient 1, et au-dessus de ladite ouverture 4. Avantageusement, le moyen d'introduction 18 pourra comprendre un support réglable, de manière à adapter, de préférence automatiquement, la position (ou altitude) de la tête d'injection 11 en fonction des dimensions du ou des récipients 1 à traiter.

De préférence, et pour les raisons et avantages explicités précédemment en lien avec le procédé selon l'invention, le moyen d'introduction 18 est conçu pour disposer et, de préférence encore maintenir, la tête d'injection 11 sensiblement en regard de l'ouverture 4 du récipient 1 et à une distance d comprise entre 1 cm et 20 cm, et de préférence entre 1 cm et 5 cm, de ladite ouverture 4, lorsque la tête d'injection 11 est en fonctionnement, c'est-à-dire lorsqu'elle forme la dose prédéterminée et la projette en direction de la cavité 3 du récipient 1. Cette distance d s'entend préférentiellement ici aussi de la distance moyenne mesurée en ligne droite entre, d'une part, l'ouverture de sortie 12 de la tête d'injection 11 et un plan contenant l'ouverture 4 du récipient 1, comme illustré à la figure 1.

De manière préférentielle, la tête d'injection 11 est conçue pour générer un cône C de projection de ladite dose prédéterminée de liquide de traitement présentant un angle θ d'apex sensiblement compris entre 0° et 5°. De manière plus préférentielle encore, la tête d'injection 11 est conçue pour générer un cône C de projection de ladite dose prédéterminée de liquide de traitement présentant un angle θ sensiblement compris entre 0° et 1°, de sorte que la dose prédéterminée de liquide de traitement puisse être avantageusement injectée dans la cavité 3 du récipient 1 selon une enveloppe fictive sensiblement cylindrique ou quasi-cylindrique.

Afin de limiter le risque d'endommagement du récipient 1 par choc thermique, lorsque le liquide de traitement entre en contact avec la face intérieure 5 chaude de la paroi 2 du récipient 1, mais également de faciliter avantageusement l'injection de l'intégralité de la dose prédéterminée de substance de traitement dans la cavité 3 des récipients 1 à traiter, et ce même à des cadences très élevées, la tête d'injection 11 est préférentiellement conçue de manière que le volume de ladite dose prédéterminée dudit liquide de traitement injecté est compris entre 5 µL et 50 µL, et de préférence entre 5 µL et 30 µL.

Selon un mode de réalisation préférentiel, la tête d'injection 11 comprend un actionneur électromécanique mû par un dispositif piézo-électrique, pour permettre le dosage et l'injection de volumes de liquide compris entre 5 µL et 50 µL, et de préférence entre 5 µL et 30 µL, en réponse à un signal électrique de commande. Alternativement, et en particulier pour des volumes de liquide de traitement à doser et à injecter plus importants, la tête d'injection 11 pourra comprendre, par exemple, un actionneur électromécanique mû par un dispositif à solénoïde(s).

Bien que l'installation 13 selon l'invention puisse présenter un intérêt pour le traitement d'un récipient 1 qui reste immobile relativement à la tête d'injection 11 lors du fonctionnement de cette dernière, l'installation 13 est préférentiellement conçue pour permettre un traitement de désalcalinisation d'un ou plusieurs récipients 1 en verre en mouvement par apport à la tête d'injection 11, de préférence à une vitesse d'au moins 25 m par minute, de préférence encore d'au moins 30 m par minute, et de préférence encore jusqu'à 40 m par minute, de manière notamment à pouvoir traiter à l'aide de la tête d'injection 11 une pluralité de récipients 1 à une cadence particulièrement élevée. Selon une variante, l'installation 13 comprend, d'une part, des moyens de déplacement de la tête d'injection 11 lors de son fonctionnement, de préférence à la vitesse susvisée, relativement au récipient 1 qui reste quant à lui immobile (dans le référentiel terrestre). Selon une variante plus préférentielle, et comme illustré schématiquement aux figures 2 et 3, l'installation 13 comprend de préférence un convoyeur 19 (par exemple à bande ou à rouleaux), ou tout autre moyen connu adéquat, conçu pour, apte à, mettre le ou les récipient(s) 1 à traiter en mouvement relativement à la tête d'injection 11, qui est maintenue immobile (dans le référentiel terrestre, par exemple par 'l'intermédiaire d'un bâti fixé au sol), de préférence à une vitesse d'au moins 25 m par minute, de préférence encore d'au moins 30 m par minute, et de préférence encore jusqu'à 40 m par minute. Dans ce cas de figure, et comme illustré en exemple à la figure 2, le convoyeur 19 peut être alors préférentiellement positionné en-dessous et en regard de la tête d'injection 11, le récipient 1 pouvant être positionné verticalement, avec son fond 7 reposant sur le convoyeur 19 et son ouverture 4 orientée vers le haut, de sorte que ladite ouverture 4 vienne se positionner en-dessous (et de préférence, à l'aplomb de) l'ouverture de sortie 12 de la tête d'injection 11. Eventuellement, le convoyeur 19 pourra être le même que le convoyeur 17 que comprend, selon l'exemple proposé ci-avant, le système de collecte 15 du récipient 1 en verre en sortie d'une machine de formage 16.

De manière préférentielle, l'installation 13 selon l'invention comprend un moyen de détection 20 de la présence du récipient 1 en amont de la tête d'injection 1, et une unité de commande 21 reliée, mécaniquement ou électriquement, d'une part au moyen de détection 20 et d'autre part à la tête d'injection 11, pour synchroniser le déclenchement du fonctionnement de la tête d'injection 11 avec l'arrivée du récipient 1 au niveau de la tête d'injection 11, et de préférence en regard de l'ouverture de sortie 12 de cette dernière, comme envisagé ci-avant en lien avec le procédé selon l'invention. Par exemple, le moyen de détection 20 peut être de type barrière optique et comprendre soit un émetteur de faisceau lumineux (par exemple infrarouge) positionné en regard d'une cellule photoélectrique, soit une cellule de détection 22 comprenant à la fois un émetteur de faisceau lumineux (par exemple infrarouge) et une cellule photoélectrique et un réflecteur 23 de lumière positionné en regard d'une cellule photoélectrique, comme dans l'exemple illustré à la figure 3. La cellule de détection 22 et le réflecteur 23 sont avantageusement positionnés de part et d'autre de la trajectoire de déplacement du récipient 1, à une distance connue de la tête d'injection 11. En l'absence de récipient 1, la cellule de détection 22 émet un faisceau lumineux (représenté en pointillés à la figure 3) qui est réfléchi par le réflecteur 23 et détecté par la cellule photoélectrique de la cellule de détection 22. Dans ce cas, l'unité de commande 21 commande l'arrêt du fonctionnement de la tête d'injection 11. En présence d'un récipient 1, le faisceau lumineux est interrompu (ou au moins perturbé) par le récipient 1, de sorte que la cellule photoélectrique ne détecte pas de faisceau lumineux (ou détecte un faisceau lumineux perturbé), ce qui signe la présence d'un récipient 1. Dans ce cas, l'unité de commande 21 commande, avec une temporisation définie selon la vitesse connue de déplacement du récipient 1, le déclenchement du fonctionnement de la tête d'injection 11. De manière particulièrement avantageuse, un tel moyen de détection 20 de type barrière optique sera conçu et agencé de manière que le faisceau lumineux émis soit interrompu par le col 9 ou la bague 10 d'un récipient 1, et non par le corps de ce dernier, de sorte à permettre une synchronisation plus fine du fonctionnement de la tête d'injection 11, et donc une injection plus précise de la dose prédéterminée de liquide de traitement dans la cavité 3 du récipient 1, lorsque ce dernier arrive au niveau de la tête d'injection 11. Bien évidemment, d'autres moyens de détection connus et adéquats, non nécessairement optiques, pourront être envisagés.

Avantageusement, le moyen d'introduction 18 du liquide de traitement peut comprendre une pluralité de têtes d'injection 11, ou une tête d'injection 11 unique pourvue d'une pluralité d'ouvertures de sortie 12, afin de permettre l'injection d'une dose prédéterminée de liquide de traitement de manière simultanée dans la cavité 3 d'une pluralité de récipients 1 en verre (que ces derniers soient ou non alors en mouvement relativement aux têtes d'injection 11), et / ou permettre l'injection successive de plusieurs doses prédéterminées de liquide de traitement dans la cavité 3 d'un même récipient 1. Le moyen d'introduction 18 peut alors comprendre, par exemple, une pluralité de têtes d'injection 11 distinctes, montées l'une à la suite de l'autre selon la trajectoire de déplacement relatif des têtes d'injection et du ou des récipient(s) 1. Alternativement et / ou en complément, le moyen d'introduction 18 peut comprendre une pluralité de têtes d'injection 11 distinctes montées l'une à côté de l'autre selon une direction transverse à la trajectoire de déplacement relatif des têtes d'injection et des récipient(s) 1, de sorte à permettre le traitement de récipients 1 en verre agencés en rangées.

En complément ou alternativement à un tel moyen de détection 20 de la présence du récipient 1 en amont de la tête d'injection 11, l'installation 13 comprend avantageusement, lorsqu'elle est prévue pour traiter successivement ou simultanément une pluralité de récipients 1 en verre, un moyen de contrôle de la position relative et de mise au pas des récipients, en amont de la ou des tête(s) d'injection 11, de sorte à améliorer encore la précision de l'injection de la dose prédéterminée de liquide de traitement à l'intérieur de la cavité 3 des récipients 1 à traiter. De tels moyens de contrôle de la position relative et de mise au pas des récipients sont connus en tant que tels dans le domaine du traitement de récipient en verre, de sorte qu'il n'est pas nécessaire de les décrire ici plus en détail.

Avantageusement, l'installation 13 comprend un système de préparation et / ou de stockage 24 du liquide de traitement, en amont de la tête d'injection 11 du moyen d'introduction 18. Ce système de préparation et / ou de stockage 24 peut avantageusement comprendre, un système de mélange 25 de la substance de traitement et du liquide volatile, pour obtenir et / ou conserver un liquide de traitement parfaitement homogène. Afin d'améliorer encore la répétabilité et la fiabilité du traitement de désalcalinisation, en tenant compte d'éventuelles variations de conditions climatiques, l'installation 13 selon l'invention comprend de préférence, et par exemple au niveau du système, évoqué ci-dessus, de préparation et / ou de stockage 24 du liquide de traitement, un système de régulation thermique 26 pour maintenir le liquide de traitement à une température prédéfinie constante avant que ce dernier ne soit injecté dans la cavité 3 du récipient 1 par la tête d'injection 11. Avantageusement, le moyen d'introduction 18 peut comprendre, et par exemple au niveau dudit système de préparation et / ou de stockage 24 du liquide de traitement, un système de pressurisation 27 du liquide de traitement en amont de ou dans la tête d'injection 11, par exemple à une pression relative comprise entre 0,5 bar et 4 bar.

L'installation 13 selon l'invention pourra avantageusement comprendre, en aval du moyen d'introduction 18 du liquide de traitement dans la cavité 3 du récipient 1, et de préférence au-dessus de l'ouverture 4 du récipient 1, une ou plusieurs hottes 28 d'extraction pour aspirer et évacuer efficacement les dégagements gazeux résultant de la réaction de désalcalinisation du verre. L'installation 13 selon l'invention pourra avantageusement comprendre, en aval du moyen d'introduction 18 du liquide de traitement dans la cavité 3 du récipient 1, un moyen de transmission 29 du récipient 1 traité à l'entrée d'un dispositif de recuisson 30 de récipients en verre, telle qu'une arche de recuisson 30 industrielle classique. Le moyen de transmission 29 peut, par exemple, comprendre un bras avantageusement robotisé et / ou un convoyeur 31 (par exemple à bande ou à rouleaux), conçu(s), agencé(s) et dimensionné(s) pour collecter le récipient 1 en verre traité au niveau, ou en aval, du moyen d'introduction 18 et l'amener à l'entrée du dispositif de recuisson 30.

Comme on le comprend à la lecture de la description détaillée qui en a été faite ci-avant, les procédé et installation selon l'invention peuvent être avantageusement intégrés directement à des procédé et ligne de fabrication industrielle de récipients en verre, l'installation selon l'invention pouvant être positionnée dans une ligne de fabrication, entre une machine de formage de récipients en verre et un dispositif de recuisson de ces derniers.

Avantageusement, les procédé et installation selon l'invention permettent la désalcalinisation de la face intérieure de la paroi d'un grand nombre de récipients en verre, à une cadence qui peut être supérieure à 400 flacons / minute en simple rang (une seule tête d'injection) ou à 800 flacons / minute en double rang (deux rangs parallèles de récipients sur le convoyeur, deux têtes d'injection), en particulier pour des récipients d'une contenance nominale de 5 mL à 50 mL, et ce tout en atteignant un niveau de résistance hydrolytique des récipients traités meilleurs que celui habituellement atteint à l'aide de procédés et installations connus de désalcalinisation par une substance de traitement solide ou gazeuse.

### POSSIBILITE D'APPLICATION INDUSTRIELLE

L'invention trouve son application dans le domaine des procédés et installations de traitement de récipients en verre, et plus précisément dans le domaine technique des procédés et installations de traitement de désalcalinisation de la paroi intérieure de récipients en verre, tels que par exemple des récipients formant des emballages primaires en verre à usage pharmaceutique.

## Revendications

1. Procédé de désalcalinisation de la face intérieure (5) de la paroi (2) d'un récipient (1) en verre, tel qu'un flacon, laquelle paroi (2) délimite une cavité d'accueil (3) pour un produit et une ouverture (4) donnant accès à ladite cavité d'accueil (3), ledit procédé comprenant
- une étape de fourniture d'un récipient (1) en verre dont la face intérieure (5) de la paroi (2) est à une température d'au moins 350°C, et
- une étape d'introduction à l'intérieur de ladite cavité d'accueil (3), alors que ladite face intérieure (5) est à une température d'au moins 350°C, d'un liquide de traitement contenant une substance de traitement conçue pour réagir sous l'effet de la chaleur de la face intérieure (5) de la paroi (2) du récipient (1) pour provoquer une désalcalinisation du verre,
ladite étape d'introduction comprenant au moins une opération d'injection, à l'aide d'une tête d'injection (11) disposée à distance de l'ouverture (4) du récipient (1) et en dehors de ce dernier, d'une dose prédéterminée dudit liquide de traitement selon un cône (C) de projection suffisamment étroit relativement à l'ouverture (4) du récipient (1) pour que sensiblement l'intégralité de ladite dose prédéterminée se retrouve à l'intérieur de la cavité (3) du récipient (1).

2. Procédé selon la revendication précédente, dans lequel
- ladite étape de fourniture est une étape de fourniture d'un récipient (1) en verre dont la face intérieure (5) de la paroi (2) est à une température comprise entre 350°C et 850°C, de préférence comprise entre 350°C et 800°C, de préférence encore comprise entre 350°C et 700°C,
- ladite étape d'introduction étant une étape d'introduction dudit liquide de traitement à l'intérieur de ladite cavité d'accueil (3), alors que ladite face intérieure (5) est à une température comprise entre 350°C et 850°C, de préférence comprise entre 350°C et 800°C, de préférence encore comprise entre 350°C et 700°C.

3. Procédé selon l'une quelconque des revendications précédentes, dans laquelle l'étape de fourniture du récipient (1) comprend une opération de collecte d'un récipient (1) en verre en sortie d'une machine de formage à chaud d'un récipient en verre à partir d'une ébauche en verre, alors que ledit récipient (1) est encore suffisamment chaud pour que la face intérieure (5) de sa paroi (2) soit à une température d'au moins 350°C, de préférence comprise entre 350°C et 850°C, de préférence comprise entre 350°C et 800°C, de préférence encore comprise entre 350°C et 700°C.

4. Procédé selon l'une quelconque des revendications précédentes, dans lequel ladite substance comprend un composé soufré, en solution ou en suspension dans un liquide volatile, ledit composé soufré étant de préférence un sulfate d'ammonium, ledit liquide volatile étant de préférence de l'eau.

5. Procédé selon l'une quelconque des revendications précédentes, dans lequel la tête d'injection (11) est disposée sensiblement en regard de l'ouverture (4) du récipient (1) et à une distance (d) comprise entre 1 cm et 20 cm, et de préférence entre 1 cm et 5 cm, de ladite ouverture (4) au cours de ladite étape d'injection.

6. Procédé selon l'une quelconque des revendications précédentes, dans lequel ledit cône (C) de projection présente un angle (θ) d'apex compris entre 0° et 5°, et de préférence entre 0° et 1°.

7. Procédé selon l'une quelconque des revendications précédentes, dans lequel le volume de ladite dose prédéterminée de liquide de traitement est choisi sensiblement compris entre 5 µL et 50 µL, et de préférence entre 5 µL et 30 µL.

8. Procédé selon l'une quelconque des revendications précédentes, dans lequel ladite opération d'injection est réalisée alors que le récipient (1) est en mouvement relativement à la tête d'injection (11), de préférence à une vitesse d'au moins 25 m par minute, de préférence encore d'au moins 30 m par minute, de préférence encore jusqu'à 40 m par minute.

9. Installation (13) de désalcalinisation de la face intérieure (5) de la paroi (2) d'un récipient (1) en verre, tel qu'un flacon, laquelle paroi (2) délimite une cavité d'accueil (3) pour un produit et une ouverture (4) donnant accès à ladite cavité d'accueil (3), ladite installation (13) comprenant
- un moyen de fourniture (14) d'un récipient (1) en verre dont ladite face intérieure (5) est à une température d'au moins 350°C, et
- un moyen d'introduction (18) à l'intérieur de ladite cavité d'accueil, alors que ladite face intérieure (5) est à une température d'au moins 350°C, d'un liquide de traitement contenant une substance de traitement conçue pour réagir sous l'effet de la chaleur de la face intérieure (5) du récipient (1) pour provoquer une désalcalinisation du verre,
ledit moyen d'introduction (18) du liquide de traitement comprenant au moins une tête d'injection (11) conçue pour être disposée à distance de l'ouverture (4) du récipient (1) et en dehors de ce dernier, et pour injecter une dose prédéterminée dudit liquide de traitement selon un cône (C) de projection suffisamment étroit relativement à l'ouverture (4) du récipient (1) pour que sensiblement l'intégralité de ladite dose prédéterminée se retrouve à l'intérieur de la cavité (3) du récipient (1).

10. Installation (13) selon la revendication précédente, dans lequel
- ledit moyen de fourniture (14) est un moyen de fourniture (14) d'un récipient (1) en verre dont la face intérieure (5) de la paroi (2) est à une température comprise entre 350°C et 850°C, de préférence comprise entre 350°C et 800°C, de préférence encore comprise entre 350°C et 700°C,
- ledit moyen d'introduction (18) étant un moyen d'introduction (18) dudit liquide de traitement à l'intérieur de ladite cavité d'accueil (3), alors que ladite face intérieure (5) est à une température comprise entre 350°C et 850°C, de préférence comprise entre 350°C et 800°C, de préférence encore comprise entre 350°C et 700°C.

11. Installation (13) selon la revendication précédente, dans laquelle le moyen de fourniture (14) du récipient comprend un système de collecte (15) d'un récipient (1) en verre en sortie d'une machine de formage à chaud d'un récipient à partir d'une ébauche en verre, alors que ledit récipient (1) est encore suffisamment chaud pour que la face intérieure (5) de sa paroi (2) soit à une température d'au moins 350°C, de préférence comprise entre 350°C et 850°C, de préférence comprise entre 350°C et 800°C, de préférence encore comprise entre 350°C et 700°C.

12. Installation (13) selon l'une quelconque des revendications 9 à 11, dans laquelle le moyen d'introduction (18) est conçu pour disposer la tête d'injection (11) sensiblement en regard de l'ouverture (4) du récipient (1) et à une distance (d) comprise entre 1 cm et 20 cm, et de préférence entre 1 cm et 5 cm, de ladite ouverture (4), lorsque la tête d'injection (11) est en fonctionnement.

13. Installation (13) selon l'une quelconque des revendications 9 à 12, dans laquelle la tête d'injection (11) est conçue de sorte que ledit cône (C) de projection présente un angle d'apex compris entre 0° et 5°, de préférence entre 0° et 1°.

14. Installation (13) selon l'une quelconque des revendications 9 à 13, dans laquelle la tête d'injection (11) est conçue de manière que le volume de ladite dose prédéterminée dudit liquide de traitement injecté est compris entre 5 µL et 50 µL, et de préférence entre 5 µL et 30 µL.

15. Installation (13) selon l'une des revendications 9 à 14, laquelle comprend un convoyeur (20) conçu pour mettre le récipient (1) en mouvement relativement à la tête d'injection (11), de préférence à une vitesse d'au moins 25 m par minute, de préférence encore d'au moins 30 m par minute, et de préférence encore jusqu'à 40 m par minute.
